# EUROPEAN PATENT SPECIFICATION

(11) **EP 4 376 621 B1**
(45) Date of publication and mention of the grant of the patent: **23.07.2025**
(21) Application number: 22757652.7
(22) Date of filing: 29.07.2022
(51) Int. Cl.: A21B 1/44, F24C 1/04, F24C 11/00, A21B 1/04, A21B 1/33

(54) **OVEN FOR COOKING FOOD**
OFEN ZUM KOCHEN VON LEBENSMITTELN
FOUR POUR LA CUISSON DES ALIMENTS

(30) Priority: 30.07.2021 IT 202100020459
(43) Date of publication of application: 05.06.2024
(73) Proprietor: El Shrbiny, Amro, 16035 Rapallo (GE) (IT)
(72) Inventor: El Shrbiny, Amro, 16035 Rapallo (GE) (IT)
(74) Representative: Bottino, Giovanni
(86) International application number: PCT/IB2022/057054
(87) International publication number: WO 2023/007450

(56) References cited:
- EP-A2- 1 825 755
- FR-A- 482 718
- FR-A- 832 417
- FR-A1- 2 502 749
- FR-A1- 2 717 566
- GB-A- 326 682
- GR-B- 1 002 513
- US-A- 1 119 182
- US-A- 1 211 404
- US-A- 1 400 558
- US-A- 243 929
- US-A- 3 425 364
- US-A- 531 602
- US-A- 675 843
- US-A1- 2016 316 525

## Description

The present invention relates to an oven for cooking food comprising:
a) a first cooking chamber delimited below by a first plate
b) a second cooking chamber delimited below by a second plate
c) a heat source.

Ovens for cooking food, in particular the ovens for cooking pizzas supplied to pizzerias and restaurants, must be capable of cooking a high number of pizzas per time unit, so as to be able to meet the requests of a significantly numerous clientèle, for example on days when the restaurant is full. This need is currently faced by using either a plurality of ovens, where permitted in relation to the necessary spaces and economic availability or, alternatively, by using ovens with multiple cooking chambers. The latter are typically referred to as "double deck ovens".

However, in spite of the name, said double deck ovens consist, in practice, of actual separate and overlapping ovens, whose cooking chambers each include an independent top and bottom. The independent cooking chambers also each require a heat source, so that the heating and temperature maintenance of the chambers for the entire period of use is ensured.

Furthermore, as can be easily deduced, both of the aforementioned solutions require spaces intended for said devices, which may not be within the reach of all restaurants. In fact, it is true that the double deck ovens consist of a single vertical structure, and thus ensure a saving in terms of space with respect to a pair of separate ovens; however, they also include a considerable volumetric footprint, precisely by virtue of the presence of dividing partitions necessary to separate the cooking chambers and make them independent.

Although the double deck oven ensures a benefit in terms of volume with respect to a pair of separate ovens, its main technical limit is that, similarly to a plurality of ovens, each cooking chamber is independent from the other and thus requires its own heat source for heating and maintaining the temperature.

In order to increase the number of pizzas to cook per time unit, both the double deck oven and a plurality of independent ovens can ensure a greater production capacity with respect to the case of a single oven, but the associated energy expenditure is much higher, and not always advantageous and/or an option for the manager of the restaurant.

An effective solution to satisfactorily remedy the technical limitations highlighted above is not currently available.

Consequently, even today, an oven capable of cooking a substantial number of pizzas - greater than that allowed by a single oven - and which simultaneously requires a single heat source for several cooking chambers and is characterized by a limited energy expenditure appears to be lacking.

Relevant prior art may be found in US531602 A and US3425364 A.

The present invention aims to overcome the drawbacks of the aforesaid prior art by means of an oven as described at the beginning, characterized in that said second cooking chamber overlaps said first chamber and said second plate delimits said first cooking chamber above, said first and second chambers communicating with each other.

In the present patent application, the term "plate" preferably refers to a plane of circular shape.

According to a descriptive and non-limiting embodiment, said plate consists of a circular plane with a diameter of 122 cm, made of refractory cement of mineral origin.

According to an embodiment, said second plate overlaps said first plate, preferably at a distance of 30 centimetres.

Said plates host the pizzas during cooking, i.e., they host the pizzas once they are inserted in the first and second cooking chamber of said oven by a human operator.

The second plate delimits the first cooking chamber above; advantageously, therefore, said second plate acts, at the same time, both as a cooking plate of the second cooking chamber, and as a ceiling/vault of the first cooking chamber. This allows a significant reduction in volumetric footprint with respect to a traditional double deck oven, since said second plate itself simultaneously constitutes the ceiling for said first cooking chamber and the floor for said second cooking chamber, effectively eliminating all the volumetric footprints of the double deck oven related to the presence of dividing partitions between the two cooking chambers.

Said two plates have a smaller diameter with respect to the size of the first and second cooking chamber, thus making said chambers communicating with each other.

Said heat source, also by virtue of the fact that said first and second cooking chamber are communicating with each other, can provide for the heating and temperature maintenance of both cooking chambers simultaneously, as well as of both plates simultaneously, as will be described in detail below. The energy provided by said heat source is thus advantageously distributed on both cooking plates/chambers of the oven object of the present patent application.

Said oven thus provides an energy saving with respect to the typical double deck ovens, but at the same time ensures the same production capacity of said ovens.

According to an embodiment, said first and second plate are mounted rotatably.

According to a preferred embodiment, said plates rotate on a single axis, said rotation being allowed by an associated electric motor.

The rotating plates advantageously provide a simultaneous and uniform cooking of a plurality of pizzas.

The rotation of the plates advantageously provides the possibility of not burning the pizzas near the heat source and, at the same time, properly cooking the pizzas which are initially placed on the plates in a position far from said heat source.

Advantageously, moreover, the presence of rotating plates in the oven object of the present application provides for the elimination of manual operations, such as moving and turning the pizzas during cooking, which must currently be performed by a human operator.

According to an embodiment, said heat source comprises at least one gas burner and/or a wood combustion chamber.

According to a preferred embodiment, said heat source comprises a pair of gas burners and a wood combustion chamber.

Alternatively, said heat source can consist of one or more resistors in the case of the electric power supply of the oven.

Advantageously, the heat produced by both preferred heat sources - wood and gas - heats both cooking chambers and the associated plates by direct irradiation and convection, the latter due to the circulation of air in said chambers, as will be illustrated in more detail below.

According to an embodiment, the wood combustion chamber is placed laterally to said first and second cooking chamber, as better illustrated in the Figures.

In particular, said wood combustion chamber is placed adjacent to said first cooking chamber.

According to an embodiment, said wood combustion chamber comprises a grill for cooking food.

Preferably, said grill is removably placed above said combustion chamber inside the oven, and is configured for cooking dishes other than pizza, for example meat, directly above the flame of the combustion chamber itself.

The wood combustion chamber can further comprise a lower drawer, as better illustrated in the Figures, configured for collecting the ash produced.

According to an embodiment, the first gas burner of said pair is placed below said first plate.

Said first burner is preferably placed below said first plate in the opposite position with respect to the wood combustion chamber and, consequently, in the opposite position to the fire produced by said wood combustion.

Said first burner directly heats said first irradiation plate.

According to an embodiment, the second gas burner of said pair comprises a first portion which protrudes in said first chamber and a second portion facing the top of said oven.

Said second burner is preferably placed adjacent to said wood combustion chamber. The first portion of said second burner protrudes in said first cooking chamber, while said second portion extends towards the top of the oven, parallel to the side walls of the oven, as better illustrated in the Figures.

Said first portion of the second burner thus directly heats both the first cooking chamber, in which it protrudes, and the second plate of the second cooking chamber, below which it lies, as better illustrated in the Figures.

Said second portion of the second burner is configured to heat said cooking chambers by means of an air circulation system present in the oven, as will be illustrated in more detail below.

According to an embodiment, said second burner comprises at least two, and preferably four, perforated cannulae.

According to an embodiment, the oven comprises at least one element which protrudes in said first cooking chamber, said element being configured to convey part of the flame produced in said combustion chamber in said first cooking chamber.

Said element preferably consists of a sheet, which is arranged parallel to the second cooking plate, and placed below said plate. The sheet is fixed near the wood combustion chamber, preferably for the entire length of said chamber, and protrudes in the first cooking chamber, similar to the first portion of the second burner. Said sheet, near the oven opening doors, has a vertical "L"-shape.

Advantageously, said sheet allows to convey part of the flame that develops in the wood combustion chamber in said first cooking chamber, ensuring a better heating thereof, and prevents the flame from burning the second plate and the pizzas lying there.

The oven can further include at least a second sheet fixed in the position opposite said first sheet, e.g., so as to ensure better air/heat circulation in the oven.

According to an embodiment, the oven object of the present application comprises a plurality of barriers configured to partially and/or entirely envelop said second cooking chamber, inside the oven.

The barriers are advantageously configured to convey the heat generated by the heat source, preferably by the second burner and the wood combustion chamber, in said first and second cooking chamber.

Said barriers preferably consist of iron/steel partitions, which are configured to convey the heat generated both by the second burner, in particular by the second portion of said second burner, and by the combustion of the wood in said first and second cooking chamber.

According to an embodiment, said barriers participate in defining a gap with the walls of the oven, said gap being configured to convey the heat generated by said heat source along the perimeter of said second cooking chamber and, subsequently, in said first cooking chamber.

The iron/steel partitions constituting said barriers thus participate in defining an inner gap in the oven; in particular, said partitions partially and/or entirely envelop the second cooking chamber inside the oven, creating a heat path in the space between the partitions enveloping the second cooking chamber and the concrete walls delimiting the oven itself, as better illustrated in the Figures. The gap thus constitutes a heat path along the perimeter of the second cooking chamber, said perimeter being defined by the partitions, said path finally ending near the first cooking chamber, where the gap itself opens/ends and the heat is thus conveyed.

Said barriers or partitions advantageously provide a continuous circulation of air inside and outside said oven cooking chambers, so as to best exploit the heat generated, and so as to minimize the consumption of fuel - gas and wood - and, consequently, to ensure a uniform temperature.

Advantageously, said barriers provide a recirculation of air inside the oven itself, in a uniform manner, ensuring that the oven reaches the operating temperature in about half the time with respect to a traditional oven.

In particular, said barriers partially and/or entirely envelop the second cooking chamber, participating in defining a gap which is delimited, on one side, by the barriers themselves inside the oven, which envelop the second cooking chamber, and on the other by the concrete walls delimiting the oven itself. Consequently, the heat produced by the heat source, in particular by the combustion of the wood and by the second burner, rising towards the top of the oven, is conveyed in said gap near said second cooking chamber; travelling the gap, the heat runs along the perimeter of the second cooking chamber defined by the partitions, and is finally conveyed to the first cooking chamber, where the gap opens.

During its passage in the gap, the heat heats the partitions delimiting the gap itself, thus also further heating the second cooking chamber; at the same time, the heat is also conveyed towards the first cooking chamber, as better illustrated in the Figures.

Said barriers, ensuring the conveying of heat in the two cooking chambers, advantageously achieve, in combination with the rotating plates, a constant temperature while cooking pizza, which ensures a high-quality product.

According to the invention, said second cooking chamber comprises a perforated door, said perforated door comprising an air chamber.

According to the invention, the perforated door is configured to provide for the opening/closing of said second cooking chamber, and said air chamber consists of a double steel wall comprising a plurality of holes spaced from each other, as better illustrated in the Figures.

Said holes are configured to convey the fumes generated in the oven to a flue, as will be described in detail below.

Preferably, said oven also comprises a closing/opening door of the first cooking chamber, said door consisting of a single wall, and an opening/closing door for the wood combustion chamber.

According to an embodiment, there is an empty space between the doors of the cooking chambers, configured to provide for the entry of the air necessary for combustion into the oven.

The plurality of spaced holes placed on said perforated door of the second cooking chamber comprises:
a) first holes located on the face of the double steel wall which is exposed to the second cooking chamber;
b) second holes located near the base of the double steel wall of said door, said holes being inclined by 90° with respect to said first holes and facing the direction of the first cooking chamber and
c) third holes located near the top of the double steel wall of said door, said holes being parallel and coaxial to said second holes.

Since said cooking chambers are communicating with each other, the fumes generated in the wood combustion chamber can migrate into said first and second cooking chamber, finally entering said first and second holes of the perforated door. At this point the fumes are collected inside the air chamber, i.e., inside the double steel wall of said perforated door. From here, by means of said third holes, the fumes can advantageously be collected in a duct placed above said second cooking chamber, which provides for conveying the collected fumes to a chimney or flue of said oven.

According to a preferred embodiment, said duct preferably has a minimum diameter of 20 cm.

According to an embodiment, said oven comprises a control unit.

Said control unit consists, by way of example, of a computerized electrical control unit, which advantageously ensures a practical and functional management of the oven, in fact providing for the control of the temperature inside said first and second cooking chamber, as well as providing for the control of the electric motor responsible for the rotation of said plates.

These and other features and advantages of the present invention will become clearer from the following disclosure of some exemplary embodiments illustrated in the accompanying drawings in which:
figure 1 shows a schematic representation of the outside of the oven object of the present patent application;
fig. 2 shows a schematic representation of the inside of the oven;
fig. 3 shows a schematic representation of the perforated door for opening/closing the second cooking chamber;
fig. 4 shows a schematic representation of the profile of the oven during the collection and discharge of fumes from the cooking chambers;
Fig. 5 shows an embodiment of the wood combustion chamber.

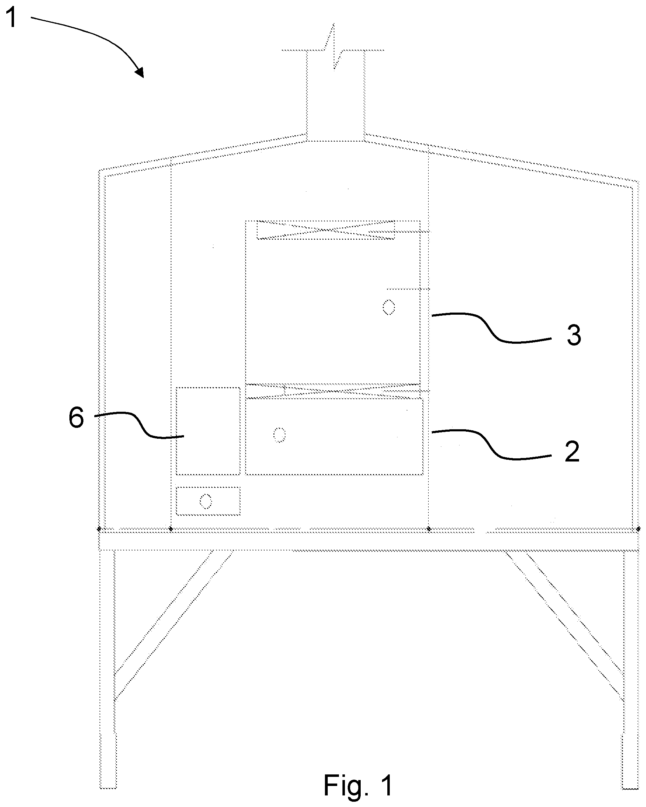

In detail, Figure 1 frontally shows the oven 1 object of the present patent application.

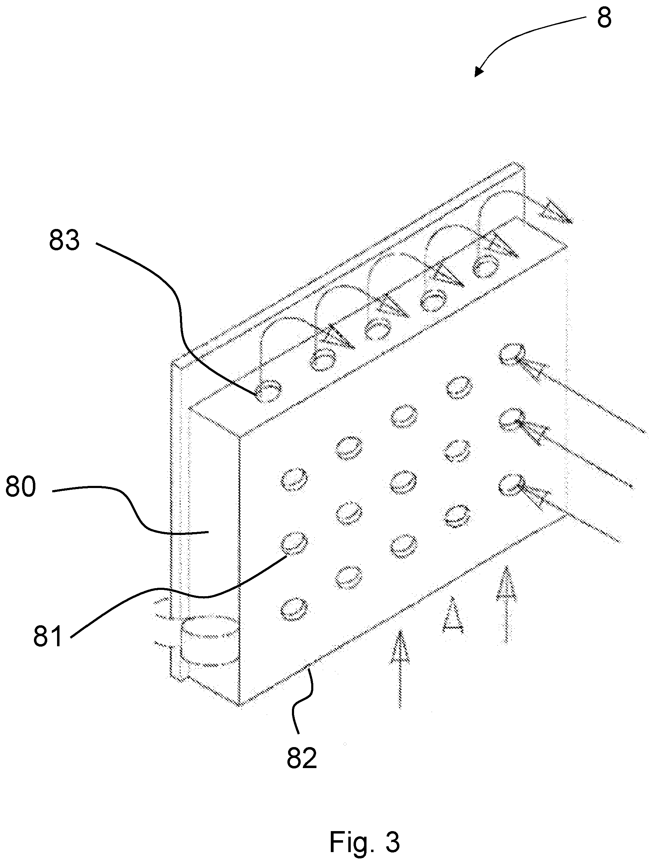

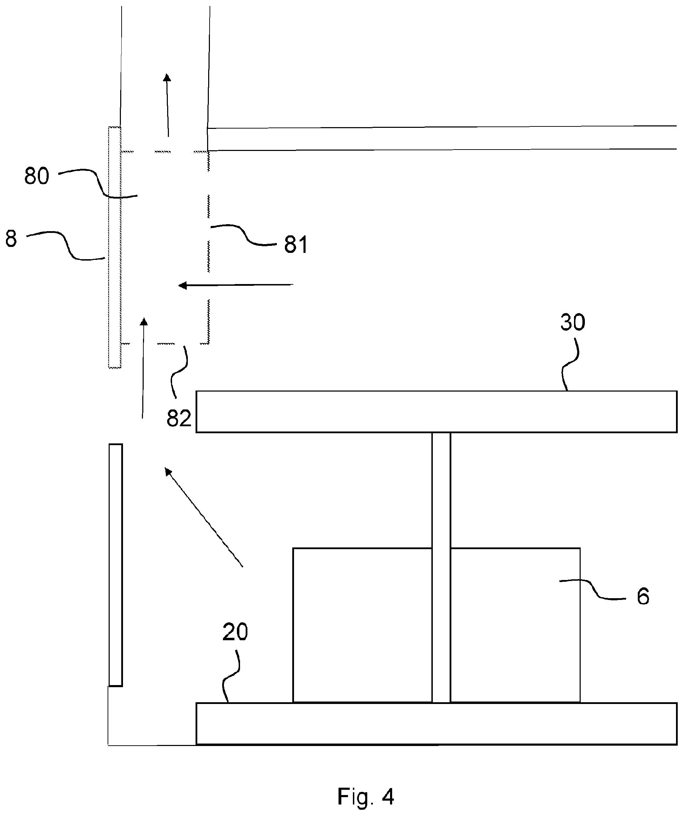

The oven 1 comprises a first and a second cooking chamber 2 and 3, respectively, with the second cooking chamber 3 overlapping the first chamber 2. The entrance to the wood combustion chamber 6 is in a position adjacent to the first cooking chamber 2. The doors of the respective cooking chambers can open in the opposite direction with respect to each other. There is an empty space in the intermediate position between the door of the first and second cooking chamber, configured to provide the air necessary for combustion to enter the oven. In particular, the door of the cooking chamber 3 is a perforated door, as better illustrated in the following Figures 3 and 4.

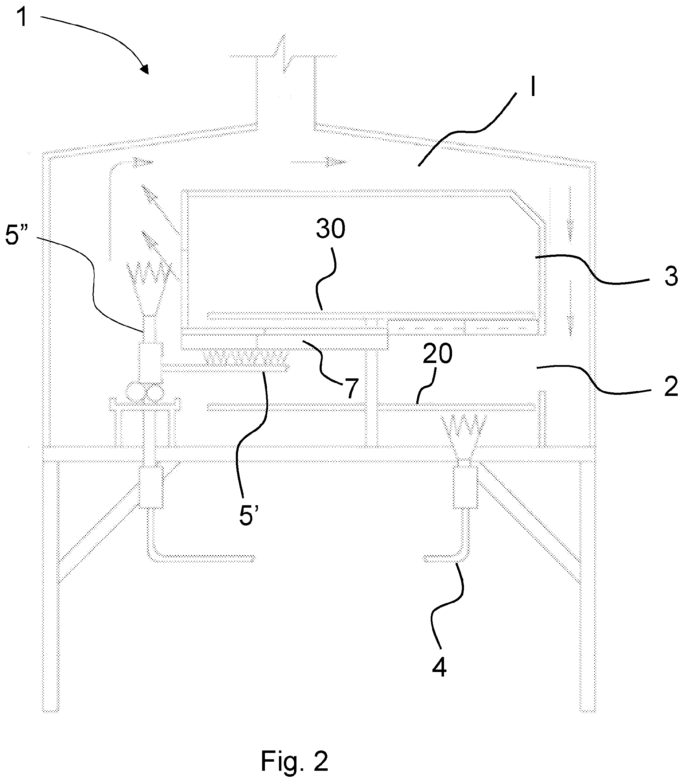

Figure 2 shows the interior of the oven 1, which comprises said first cooking chamber 2, which is delimited below by a first circular plate 20, said second cooking chamber 3, which is delimited below by a second circular plate 30, and a heat source comprising a pair of gas burners 4, 5 and a wood combustion chamber 6, the latter not shown in the Figure. As explained in relation to the previous Figure, the wood combustion chamber is placed adjacent to the first cooking chamber 2, near the second burner 5. The two circular plates are rotating on a single axis, and the rotation is allowed by an associated electric motor not shown in the Figure. The second rotating plate 30, in addition to delimiting the second cooking chamber 3 below, i.e., constituting the floor of the second cooking chamber 3, also constitutes the ceiling/vault of the first cooking chamber 2. Preferably the two plates 20, 30, which are coaxial, are spaced by 30 centimetres in length, and have a smaller diameter with respect to the size of the cooking chambers 2 and 3, consequently making said chambers communicating with each other. The heat source, in particular, provides heat to both the rotating plates 20, 30 and to both the cooking chambers 2, 3. Of the pair of gas burners, the first burner 4 is placed below said first plate 20. In particular, the first burner 4 is placed below the first plate 20 in a position opposite the wood combustion chamber 6. The second burner 5 is instead placed adjacent to the wood combustion chamber 6. Said gas burner 5 comprises a first portion 5' which protrudes in the first chamber 2 and a second portion 5" which extends towards the top of the oven 1, parallel to the side walls of the oven. By means of the respective opening/closing doors of the cooking chambers 2 and 3, an operator can place the pizzas to be cooked on the plates 20, 30. Rotating, said plates cyclically bring the pizzas near the wood combustion chamber 6 and the second burner 5 and, in the case of the first plate 20, also near the first burner 4. The heat produced by the pair of burners and the wood combustion chamber cooks the pizzas situated in both cooking chambers. The oven 1 comprises at least one sheet 7 which is arranged parallel to the second plate 30, and placed below said plate. The sheet is fixed near the wood combustion chamber 6, preferably for the entire length of said chamber 6, and protrudes in said first cooking chamber 2, similar to the first portion of the second burner 5'. The sheet 7 has, near the oven opening doors, a vertical "L" shape. Said sheet 7 allows to convey part of the flame which develops in the wood combustion chamber 6 in said first cooking chamber 2, ensuring a better heating thereof, and at the same time prevents the flame from burning the second plate 30 and the pizzas lying there.

The burner 4 mainly heats the first plate 20, while the burner 5 and the wood combustion chamber 6 heat both the first cooking chamber 2 and the second plate 30 and said second cooking chamber 3. Said heating occurs either by direct irradiation or by heat circulation in the two chambers.

Specifically, the first portion 5' of the second burner provides direct heat by means of irradiation of both the first chamber 2 and the second plate 30. The same is true for the wood combustion chamber in combination with the sheet 7, which guides part of the flame in said first cooking chamber 2 immediately below the second plate 30. However, the combustion of wood also generates heat which rises vertically, towards the top of the oven. The same is true for the second portion 5" of the second gas burner. Said heat is collected in a metallic gap I inside the oven.

In fact, the oven 1 comprises a plurality of barriers/partitions which envelop the second cooking chamber 3, creating a path for the heat inside the oven, in the space between said partitions which envelop the second cooking chamber 3 and the concrete walls delimiting the oven itself, as indicated by the arrows. The gap I thus defined constitutes a heat path along the perimeter of the second cooking chamber 3, said perimeter being defined by the partitions themselves, to finally convey it to the first cooking chamber 2, near which the gap itself opens/ends. The path followed by the heat is illustrated in the Figure by the arrows. In said path, the heat conveyed in the gap I also heats and/or maintains the temperature of said second cooking chamber 3.

The fumes which are generated/propagated in the oven are collected and conveyed to the chimney by means of the perforated door of said second cooking chamber 3, as better illustrated in the following Figures 3 and 4.

The oven 1 has a height of 100 centimetres, a width of 188 centimetres, and a total weight of about 1800 Kg. The cooking chambers are 175 centimetres deep, and the two rotating plates are made of refractory cement of mineral origin with a diameter of 122 centimetres. The oven then comprises a flue with a diameter of 20 centimetres.

The load-bearing structure of the oven consists of a prefabricated refractory concrete vault and refractory brick uprights. The base of the load-bearing structure is made of refractory bricks with a minimum thickness of 150 mm, laid on a metal support structure. The top and side of the oven is insulated with mineral material to ensure better temperature control and reduce energy consumption. All the side surfaces are also covered by a protection consisting of a metal sheet. Finally, said oven 1 comprises a control unit, not shown in the Figure, which advantageously ensures a practical and functional management of the oven, in fact providing for the control of the temperature inside said first and second cooking chamber 2 and 3, as well as providing for the control of the electric motor responsible for the rotation of said plates 20, 30.
Figure 3 illustrates the perforated door 8 of said second cooking chamber 3. Said door 8 is configured to provide for the opening/closing of the second cooking chamber 3, and comprises an air chamber 80 which consists of a double steel wall comprising a plurality of holes spaced apart from each other.

Said holes are configured to convey the fumes generated in the oven to a flue, as better shown in Figure 4 below.

The plurality of holes comprises:
a) first holes 81, located on the face of the double steel wall 80 which is exposed to the second cooking chamber 3;
b) second holes 82 located near the base of the double steel wall 80, said holes being inclined by 90° with respect to said first holes and facing the direction of the first cooking chamber 2 and
c) third holes 83 located near the top of the double steel wall 80 of said door 8, said holes being parallel and coaxial to said second holes 82.

The perforated door 8 has a length of 63 cm, a width of 40 cm and a depth of 9.50 cm.

Figure 4 illustrates a side view of the oven 1 during the collection and discharge of fumes from the cooking chambers 2 and 3. In detail, Figure 4 illustrates the profile of the cooking chambers 2, 3 and the opening/closing doors of the respective chambers. Said chambers comprise the two plates 20, 30 and the wood combustion chamber 6 is placed adjacent to the first cooking chamber 2. The pair of gas burners present in the oven has not been shown in the Figure. The fumes generated in the wood combustion chamber 6 and which propagate in the cooking chambers 2, 3 are collected in the air chamber 80 of the perforated door 8 of the cooking chamber 3. In particular, the fumes generated in the wood combustion chamber 6 and which propagate in the cooking chambers 2, 3 diffuse through the holes 81, 82 in the air chamber 80 of the perforated door 8 and, from here, by means of the upper holes 83, are conveyed into a duct placed above said second cooking chamber 3. The duct provides for conveying the collected fumes towards a chimney of the oven 1, and from here they will be expelled.

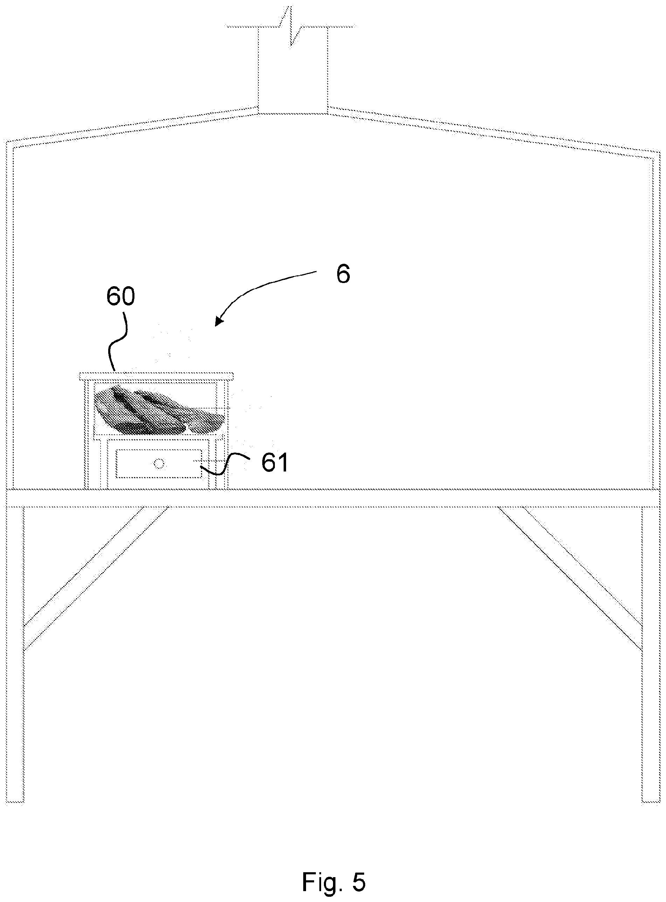

Figure 5 illustrates an embodiment of the wood combustion chamber 6 in detail. In particular, said chamber comprises a removable grill 60 at the top, which can be used, for example, for cooking meat using the same heat source which is used for cooking pizzas in the oven. There is a drawer 61 for collecting the ash next to the base of the combustion chamber 6. In particular, said drawer is configured to collect the ash which arises as a result of the combustion of wood, which occurs in a compartment placed in an intermediate position between said drawer 61 and said grill 60 in said wood combustion chamber 6. This compartment includes a door, not shown in the Figure, by which an operator can add wood to the combustion chamber, so as to revive the fire of the oven.

## Claims

1. Oven (1) for cooking food comprising:
a) a first cooking chamber (2) delimited below by a first plate (20);
b) a second cooking chamber (3) delimited below by a second plate (30);
c) a heat source,
said second cooking chamber (3) being placed on the top of said first chamber (2) and said second plate (30) delimiting said first cooking chamber (2) above, in such a way that said second plate (30) said first and second chambers (2, 3) communicating with each other,
characterized int that
said second cooking chamber (3) comprises a perforated door (8), said perforated door (8) comprising an air chamber (80), which consists of a double steel wall comprising a plurality of holes spaced apart from each other, said plurality of holes comprising:
a) first holes (81), located on the face of the double steel wall (80) which is exposed to the second cooking chamber (3);
b) second holes (82) located near the base of the double steel wall (80), said holes being inclined by 90° with respect to said first holes and facing the direction of the first cooking chamber (2) and
c) third holes (83) located near the top of the double steel wall (80) of said door (8), said holes being parallel and coaxial to said second holes (82).

2. Oven (1) according to claim 1, wherein said first and second plate (20, 30) are mounted rotating.

3. Oven (1) according to one or more of the preceding claims, wherein said heat source comprises at least one gas burner (4, 5) and/or a wood combustion chamber (6).

4. Oven (1) according to one or more of the preceding claims, wherein said heat source comprises a pair of gas burners (4, 5) and a wood combustion chamber (6).

5. Oven (1) according to claim 3, wherein it comprises a grill (60) for cooking food, placed above said wood combustion chamber (6).

6. Oven (1) according to claim 4, wherein the first gas burner (4) of said pair is placed below said first plate (20).

7. Oven (1) according to claim 4, wherein the second gas burner (5) of said pair comprises a first portion (5') which protrudes in said first chamber (2) and a second portion (5") facing the top of said oven (1).

8. Oven (1) according to one or more of the preceding claims, comprising at least one sheet (7) which sheet is arranged parallel to the second plate (30) and which sheet is placed below said second plate (30), being said sheet (7) fixed near the wood combustion chamber (6), protruding in said first cooking chamber (2).

9. Oven (1) according to one or more of the preceding claims, comprising a plurality of barriers configured to partially and/or completely envelop said second cooking chamber (3) inside the oven (1).

10. Oven (1) according to claim 9, wherein said barriers participate in defining a gap (I) with the walls of the oven (1), said gap (I) being configured to convey the heat generated by said heat source along the perimeter of said second cooking chamber (3) and, subsequently, in said first cooking chamber (2).

## Patentansprüche

1. Backofen (1) zum Garen von Lebensmitteln, umfassend:
a) eine erste Garkammer (2), die unten durch eine erste Platte (20) begrenzt ist;
b) eine zweite Garkammer (3), die unten durch eine zweite Platte (30) begrenzt ist;
c) eine Wärmequelle,
wobei die zweite Garkammer (3) auf der Oberseite der ersten Garkammer (2) angeordnet ist und die zweite Platte (30) die erste Garkammer (2) oben auf eine Weise begrenzt, dass die zweite Platte (30) die erste und die zweite Garkammer (2, 3) miteinander in Verbindung bringt,
**dadurch gekennzeichnet, dass**
die zweite Garkammer (3) eine perforierte Tür (8) umfasst, wobei die perforierte Tür (8) eine Luftkammer (80) umfasst, die aus einer doppelten Stahlwand besteht, umfassend eine Vielzahl von Löchern, die voneinander beabstandet sind, die Vielzahl von Löchern umfassend:
a) erste Löcher (81), die sich auf der Fläche der doppelten Stahlwand (80) befinden, die der zweiten Garkammer (3) ausgesetzt ist;
b) zweite Löcher (82), die sich in der Nähe des Bodens der doppelten Stahlwand (80) befinden, wobei die Löcher um 90° in Bezug auf die ersten Löcher geneigt sind und der Richtung der ersten Garkammer (2) zugewandt sind, und
c) dritte Löcher (83), die sich in der Nähe der Oberseite der doppelten Stahlwand (80) der Tür (8) befinden, wobei die Löcher parallel und koaxial zu den zweiten Löchern (82) sind.

2. Backofen (1) nach Anspruch 1, wobei die erste und die zweite Platte (20, 30) drehend montiert sind.

3. Backofen (1) nach einem oder mehreren der vorherigen Ansprüche, wobei die Wärmequelle mindestens einen Gasbrenner (4, 5) und/oder eine Holzbrennkammer (6) umfasst.

4. Backofen (1) nach einem oder mehreren der vorherigen Ansprüche, wobei die Wärmequelle ein Paar Gasbrenner (4, 5) und eine Holzbrennkammer (6) umfasst.

5. Backofen (1) nach Anspruch 3, wobei er einen Grill (60) zum Garen von Lebensmitteln umfasst, der über der Holzbrennkammer (6) platziert ist.

6. Backofen (1) nach Anspruch 4, wobei der erste Gasbrenner (4) des Paars unter der ersten Platte (20) platziert ist.

7. Backofen (1) nach Anspruch 4, wobei der zweite Gasbrenner (5) des Paars einen ersten Abschnitt (5'), der in die erste Kammer (2) hervorsteht, und einen zweiten Abschnitt (5"), der der Oberseite des Ofens (1) zugewandt ist, umfasst.

8. Backofen (1) nach einem oder mehreren der vorherigen Ansprüche, umfassend mindestens ein Blech (7), wobei das Blech parallel zu der zweiten Platte (30) angeordnet ist, und wobei das Blech unter der zweiten Platte (30) angeordnet ist, wobei das Blech (7) in der Nähe der Holzbrennkammer (6) befestigt ist und in die erste Garkammer (2) hervorsteht.

9. Backofen (1) nach einem oder mehreren der vorherigen Ansprüche, umfassend eine Vielzahl von Barrieren, die konfiguriert sind, um die zweite Garkammer (3) innerhalb des Ofens (1) teilweise und/oder vollständig zu umhüllen.

10. Backofen (1) nach Anspruch 9, wobei die Barrieren dazu beitragen, einen Spalt (I) mit den Wänden des Ofens (1) zu definieren, wobei der Spalt (I) konfiguriert ist, um die von der Wärmequelle erzeugte Wärme entlang des Umfangs der zweiten Garkammer (3) und anschließend in der ersten Garkammer (2) zu befördern.

## Revendications

1. Four (1) pour cuire des aliments comprenant :
a) une première chambre de cuisson (2) délimitée au-dessous par une première plaque (20) ;
b) une seconde chambre de cuisson (3) délimitée au-dessous par une seconde plaque (30) ;
c) une source de chaleur,
ladite seconde chambre de cuisson (3) étant placée sur le dessus de ladite première chambre (2) et ladite seconde plaque (30) délimitant ladite première chambre de cuisson (2) au-dessus, de telle sorte que ladite seconde plaque (30), lesdites première et seconde chambres (2, 3) communiquent les unes avec les autres,
**caractérisé en ce que**
ladite seconde chambre de cuisson (3) comprend une porte perforée (8), ladite porte perforée (8) comprenant une chambre à air (80), qui consiste en une double paroi en acier comprenant une pluralité de trous espacés les uns des autres, ladite pluralité de trous comprenant :
a) des premiers trous (81), situés sur la face de la double paroi en acier (80) qui est exposée à la seconde chambre de cuisson (3) ;
b) des deuxièmes trous (82) situés près de la base de la double paroi en acier (80), lesdits trous étant inclinés de 90° par rapport auxdits premiers trous et orientés dans la direction de la première chambre de cuisson (2) et
c) des troisièmes trous (83) situés près du haut de la double paroi en acier (80) de ladite porte (8), lesdits trous étant parallèles et coaxiaux auxdits deuxièmes trous (82).

2. Four (1) selon la revendication 1, dans lequel lesdites première et seconde plaques (20, 30) sont montées rotatives.

3. Four (1) selon une ou plusieurs des revendications précédentes, dans lequel ladite source de chaleur comprend au moins un brûleur à gaz (4, 5) et/ou une chambre de combustion de bois (6).

4. Four (1) selon une ou plusieurs des revendications précédentes, dans lequel ladite source de chaleur comprend une paire de brûleurs à gaz (4, 5) et une chambre de combustion de bois (6).

5. Four (1) selon la revendication 3, dans lequel il comprend une grille (60) pour cuire les aliments, placée au-dessus de ladite chambre de combustion de bois (6).

6. Four (1) selon la revendication 4, dans lequel le premier brûleur à gaz (4) de ladite paire est placé sous ladite première plaque (20).

7. Four (1) selon la revendication 4, dans lequel le second brûleur à gaz (5) de ladite paire comprend une première partie (5') qui fait saillie dans ladite première chambre (2) et une seconde partie (5") faisant face au sommet dudit four (1).

8. Four (1) selon une ou plusieurs des revendications précédentes, comprenant au moins une feuille (7), laquelle feuille est agencée parallèlement à la seconde plaque (30) et laquelle feuille est placée au-dessous de ladite seconde plaque (30), ladite feuille (7) étant fixée à proximité de la chambre de combustion de bois (6), faisant saillie dans ladite première chambre de cuisson (2).

9. Four (1) selon une ou plusieurs des revendications précédentes, comprenant une pluralité de barrières configurées pour envelopper partiellement et/ou entièrement ladite seconde chambre de cuisson (3) à l'intérieur du four (1).

10. Four (1) selon la revendication 9, dans lequel lesdites barrières participent à la définition d'un espace (I) avec les parois du four (1), ledit espace (I) étant configuré pour transporter la chaleur générée par ladite source de chaleur le long du périmètre de ladite seconde chambre de cuisson (3) et, ultérieurement, dans ladite première chambre de cuisson (2).
